# EUROPÄISCHE PATENTSCHRIFT

(11) **EP 0 976 483 B1**
(45) Veröffentlichungstag und Bekanntmachung des Hinweises auf die Patenterteilung: **07.01.2004**
(21) Anmeldenummer: 99115004.6
(22) Anmeldetag: 30.07.1999
(51) Int. Cl.: B23C 3/12, B27D 5/00

(54) **Bündigfräs- und Ziehklingenaggregat**
Flush mount milling and scraping apparatus
Appareil de fraisage affleurant et de raclage

(30) Priorität: 30.07.1998 DE 19834440
(43) Veröffentlichungstag der Anmeldung: 02.02.2000
(73) Patentinhaber: HOMAG MASCHINENBAU AG, D-72296 Schopfloch (DE)
(72) Erfinder: Gauss, Achim, 72280 Dornstetten-Hallwangen (DE); Kalmbach, Kurt, 72275 Alpirsbach (DE)
(74) Vertreter: HOFFMANN - EITLE

(56) Entgegenhaltungen:
- DE-A- 4 217 589
- DE-A- 4 323 890
- FR-A- 1 381 257
- FR-A- 1 415 542

## Beschreibung

### Technisches Gebiet

Die Erfindung betrifft ein Bündigfräs- und Ziehklingenaggregat nach dem Oberbegriff des Anspruchs 1, das in eine Spindeleinheit eines zur Bearbeitung von meist plattenförmigen Werkstücken dienenden Bearbeitungszentrums einwechselbar ist. Ein solches Kombiaggregat hat eine Aggregatschnittstelle zum Ankoppeln des Aggregats an die Spindeleinheit des Bearbeitungszentrums. Außerdem ist eine Aufnahmeeinrichtung für ein einwechselbares Fräswerkzeug vorhanden, die zur Übertragung eines Drehmomentes von der Spindeleinheit des Bearbeitungszentrums zu dem Fräswerkzeug mit der Aggregatschnittstelle gekoppelt ist. In dem Kombiaggregat ist überdies eine weitere Aufnahmeeinrichtung für ein einwechselbares Ziehklingenwerkzeug integriert.

### Stand der Technik

In CNC-Bearbeitungszentren werden plattenförmige Werkstücke aus Holz, holzähnlichen Werkstoffen oder Kunststoff auf verschiedenste Weise mit unterschiedlichen Werkzeugen bearbeitet. Die Bearbeitungswerkzeuge sind in jeweiligen Spezialaggregaten aufgenommen, die in die Spindeleinheit des Bearbeitungszentrums einwechselbar sind. Zur abschließenden Bearbeitung (Finish) profilierter Kanten von insbesondere dekorbeschichteten Platten werden häufig separate Bündigfräsaggregate und Ziehklingenaggregate eingesetzt. Mit dem Fräswerkzeug des Bündigfräsaggregates wird dabei zunächst die Kante des überstehenden Dekors bündig gefräst und je nachdem auch gleichzeitig die gewünschte Kontur der Werkstückkante gefräst. Anschließend wird die zuvor gefräste Oberfläche mit einem Ziehklingenwerkzeug (Radius- oder Flachziehklinge) des Ziehklingenaggregates abgezogen, so daß eine glatte Oberfläche entsteht.

Separate Bearbeitungsaggregate für die zuvor genannten Bearbeitungsvorgänge, die immer nur zur Aufnahme eines bestimmten Werkzeugtyps dienen, erfordern, wie oben beschrieben, nach jedem Bearbeitungsgang einen Aggregatewechsel. Durch diese häufigen Aggregatewechsel wird die Bearbeitungszeit eines Werkstücks ungünstigerweise deutlich verlängert.

Um den häufigen Werkzeugwechsel und die dadurch bedingte längere Bearbeitungszeit zu vermeiden, wurde ein beide Werkzeugarten integrierendes Bündigfräs- und Ziehklingenaggregat entwickelt, das sowohl eine Fräsbearbeitung wie auch ein Abziehen (Finish) mit einer entsprechend der gefrästen Werkstückkontur angepaßten Ziehklinge ermöglicht. Ein solches Kombiaggregat ist beispielsweise von der Fa. IMA Maschinenfabriken Klessmann bekannt und in dem Prospekt: BIMA 810/810V Bearbeitungszentrum, Seite: Werkzeuge und Aggregate beschrieben. Da das Fräswerkzeug durch die Spindeleinheit des Bearbeitungszentrums angetrieben wird, ist bei diesem Stand der Technik die Drehachse des Bündigfräswerkzeugs konzentrisch mit der Antriebsachse der Spindeleinheit des Bearbeitungszentrums, so daß das eingehende Drehmoment von der Spindeleinheit in direkter Linie auf die Werkzeugaufnahme für das Fräswerkzeug übertragen wird. Die Ziehklinge ist dementsprechend bauartbedingt exzentrisch in bezug auf die Antriebsachse des Aggregats angeordnet.

Beim konturenangepaßten Verfahren des Aggregats mit dem Ziehwerkzeug in Bearbeitungsstellung entlang der Werkstückkante treten unerwünschte Marken auf. Insbesondere bei der Verwendung einer Radiusziehklinge ist während des Abziehvorgangs ein sogenannter "Weißbruch" festzustellen, wenn das Ziehklingenwerkzeug während der Bahnfahrt verfahrensbedingt stoppt. Marken oder Weißbruch sind dabei absolut unerwünschte Unregelmäßigkeiten(Kanten) auf der Werkstückoberfläche. Die häufig sehr hohen Anforderungen an die Werkstückoberfläche, zumindest aber die optischen Anforderungen an das Werkstück, lassen Werkstücke mit Marken oder Weißbruch unbrauchbar werden.

Bisher ist nur der Einsatz von Flächenziehklingen in Kombiaggregaten für Bündigfräser und Ziehklingen möglich, um akzeptable Oberflächen zu fertigen. Der Einsatz von Radiusziehklingen hingegen ist bei den obengenannten Werkstückanforderungen nach diesem Stand der Technik nicht möglich.

### Darstellung der Erfindung

Der Erfindung liegt das technische Problem zugrunde, ein Kombiaggregat für Bündigfräser und Ziehklingen zum Einwechseln in einem Bearbeitungszentrum bereitzustellen, das die Verwendung unterschiedlicher Ziehklingenarten, insbesondere Flächen- und Radiusziehklingen, bei hoher Oberflächenqualität des abgezogenen Werkstückes ermöglicht. Speziell soll ein Bündigfräs- und Ziehklingenaggregat der genannten Gattung dahingehend verbessert werden, daß beim Berarbeiten mit dem Ziehwerkzeug keine Marken oder Weißbruch auf der Werkstückoberfläche entstehen.

Dieses technische Problem wird durch ein Bündigfräs- und Ziehklingenaggregat mit den Merkmalen des Anspruchs 1 gelöst. Ein erfindungsgemäßes Bündigfräs- und Ziehklingenaggregat nach dem Oberbegriff des Anspruchs 1 ist derart weitergebildet, daß der Abstand der Drehachse der Fräswerkzeug-Aufnahmeeinrichtung von der Drehachse der Aggregatschnittstelle größer ist als der Abstand zwischen der Drehachse der Aggregatschnittstelle und dem zur CNC-Programmierung dienenden Werkzeugbezugspunkt für das einwechselbare Ziehklingenwerkzeug. Unter Werkzeugbezugspunkt ist hier derjenige virtuelle Punkt zu verstehen, der bei der Programmierung des Bearbeitungszentrums zum Abziehen der Werkstückkante als Referenzpunkt verwendet wird. Damit kann der Werkzeugbezugspunkt auch eine Stelle (Symmetrieachse) der Ziehklingenwerkzeug-Aufnahmeeinrichtung sein.

Der Erfindung liegt die nach eingehender Untersuchung des Problems gewonnene Erkenntnis zugrunde, daß die bisher beim Verfahren des Aggregats entlang der auch Krümmungen aufweisenden Werkstückkante unvermeidbaren Oberflächenunregelmäßigkeiten - also Marken und Weißbruch - durch unterschiedliche Relativgeschwindigkeiten zwischen der Werkstückoberfläche und der Ziehklinge bedingt sind. Insbesondere bei einer Radiusziehklinge führen diese unterschiedlichen Relativgeschwindigkeiten zu dem gefürchteten Weißbruch. Erstmals ist nun die Ziehklingenwerkzeug-Aufnahmeeinrichtung näher an der Drehachse der Aggregatschnittstelle angeordnet als beim gattungsgemäßen Stand der Technik. Damit bedingt ist die Drehachse der Fräswerkzeug-Aufnahmeeinrichtung von der Drehachse der Aggregatschnittstelle weiter beabstandet angeordnet als früher. Dieser größere Abstand bringt aber beim Fräsen keine Nachteile mit sich. Zusammenfassend ist festzustellen, daß durch die erfindungsgemäße Neuanordnung der verschiedenen Aufnahmeeinrichtungen für die Werkzeuge nun auch beim Einsatz einer Radiusziehklinge die bisher auftretenden, teilweise zum Ausschuß führenden Oberflächenunregelmäßigkeiten weitgehend vermieden werden.

Der kleinste einzusetzende Radius eines Ziehklingenwerkzeugs ist auch abhängig von dem kleinsten zu fräsenden Radius, d.h. dem kleinsten einzusetzenden Fräserradius, der mit dem Aggregat hergestellt werden soll. Damit sind aber auch die zur Vermeidung der zuvor erläuterten Oberflächenunregelmäßigkeiten gerade noch tolerierbaren Maximalrelativgeschwindigkeiten festgelegt. Folglich kann es im Extremfall gerechtfertigt sein, daß die jeweiligen Abstände der Aufnahmeeinrichtung bzw. des Werkzeugbezugpunkts zu der Drehachse der Aggregatschnittstelle gleich groß sind.

Indem nun erstmals vorteilhafterweise die Ziehklingenwerkzeug-Aufnahmeeinrichtung in etwa konzentrisch zu der Drehachse der Aggregatschnittstelle angeordnet ist, ist der Werkzeugbezugspunkt des in das Bündigfräs- und Ziehklingenaggregat eingewechselten Ziehklingenwerkzeugs im wesentlichen konzentrisch mit der Drehachse der Aggregatschnittstelle. Damit ist aber eine Geschwindigkeitsänderung an der Werkstückkontur auf ein Minimum reduziert und folglich, wie sich herausgestellt hat, auch die Entstehung von Marken und Weißbruch weitgehend unterbunden. Vorteilhafterweise wird durch das Versetzen der Antriebswelle des Bündigfräsaggregats aus der Mitte des Kombiaggregats erreicht, daß die Ziehklinge in etwa in der Mitte des Aggregats anordenbar ist. Dadurch ist es möglich, trotz der beim Verfahren der Ziehklinge notwendigen Ausgleichsbewegungen des Aggregats eine Radius- oder Flächenziehklinge zu verwenden, ohne daß Marken oder Weißbruch auftreten, da bei dieser Anordnung des Ziehklingenwerkzeugs in dem Kombiaggregat die für Marken und Weißbruch verantwortlichen Geschwindigkeitsänderungen erstmals vermieden werden können.

Vorzugsweise wird das Ziehklingenwerkzeug in dem Kombiaggregat so angeordnet, daß der Werkzeugbezugspunkt des Ziehklingenwerkzeugs exakt in der Verlängerung der Drehachse der Aggregatschnittstelle positioniert ist. Diese Ausführungsform weist die größte Sicherheit gegen Marken und Weissbruch infolge der sonst auftretenden Geschwindigkeitsänderungen beim Abziehvorgang auf. Es sind allerdings auch Anordnungen sinnvoll, in denen der Bezugspunkt - beispielsweise aufgrund der baulichen Ausgestaltung - nicht exakt in der Verlängerung der Drehachse der Aggregatschnittstelle positioniert ist.

Nach einer bevorzugten Ausführungsform ist dabei der Abstand der Drehachse der Fräswerkzeug-Aufnahmeeinrichtung zur Aggregatschnittstelle größer als der Abstand des Bezugspunktes der Ziehklingenkante zur Aggregatschnittstelle. Der Abstand der Drehachse der Fräswerkzeug-Aufnahmeeinrichtung zur Einwechseleinrichtung ist bei dieser bevorzugte Ausführungsform jedoch mindestens so groß wie der Radius des Bündigfräsers. Der Abstand der Ziehklingenkante zur Einwechseleinrichtung beträgt vorzugsweise etwa 25 mm.

Vorzugsweise sind die Fräswerkzeug-Aufnahmeeinrichtung und die Ziehklingenwerkzeug-Aufnahmeeinrichtung als Schnellwechseleinrichtungen ausgebildet. Auf diese Weise wird sichergestellt, daß der Werkzeugwechsel zeitsparend und präzise durchgeführt werden kann, so daß die Bearbeitungszeit der Werkstücke reduziert wird. Normalerweise wird ein solcher Werkzeugwechsel jedoch nicht bei der Bearbeitung eines einzelnen Werkstückes erforderlich sein, sondern wenn nacheinander Werkstücke unterschiedlicher Ausgestaltung bearbeitet werden sollen. Wird eine Serie von gleichen Werkstücken mit dem Bündigfräs- und Ziehklingenaggregat bearbeitet, so ist ein Werkzeugwechsel nicht notwendig. Derartige Schnellwechseleinrichtungen für Bündigfräser oder Ziehklingen sind bekannt, so daß durch deren Einsatz keine besonderen baulichen Veränderungen des Kombiaggregats erforderlich sind und so keine unnötig hohen Kosten entstehen.

Nach einer weiteren bevorzugten Ausführungsform umfaßt das Kombi-Bündigfräs-Ziehklingenaggregat zumindest eine Ziehklingen-Aufnahmeeinrichtung, die zur Aufnahme einer Flächenziehklinge, einer Radiusziehklinge oder einer Wendeplattenziehklinge ausgebildet ist. Die Bearbeitung einiger Werkstücke macht es notwendig, daß sowohl eine Flächenziehklinge als auch eine Radiusziehklinge eingesetzt wird. Durch eine Ziehklingen-Aufnahmeeinrichtung, die sowohl eine Flächenziehklinge als auch eine Radiusziehklinge oder eine Wendeplattenziehklinge aufnehmen kann, wird ein einfacher und schneller Werkzeugwechsel ermöglicht, so daß die Bearbeitungszeit gesenkt und die Handhabung des Bearbeitungszentrums erleichtert wird.

Nach einer bevorzugten Ausführungsform der vorliegenden Erfindung ist die Schnittstelle des Bündigfräs- und Ziehklingenaggregats derart ausgebildet, daß das Aggregat um die Drehachse der Aggregatschnittstelle drehbar angeordnet ist. Dadurch wird es möglich, daß das erfindungsgemäße Kombiaggregat beispielsweise zunächst zum Bündigfräsen verwendet wird, und dann um 180° gedreht wird, so daß mit der Ziehklinge die zuvor gefräste Kante abgezogen werden kann. Durch die Verdrehbarkeit des Aggregats um die Drehachse der Aggregatschnittstelle kann die Bearbeitung eines Werkstückes mit den unterschiedlichen Werkzeugen (hier Fräser und Ziehklinge) ohne Werkzeugwechsel durchgeführt werden. Die Bearbeitungszeit für ein Werkstück reduziert sich auf diese Weise deutlich gegenüber einer Bearbeitung mit einem Aggregat, das zwischen dem Bündigfräsen und der Feinbearbeitung der Kanten durch eine Ziehklinge einen Werkzeugwechsel erfordert.

Vorzugsweise ist das Aggregat an seiner Schnittstelle zum Bearbeitungszentrum mit Zapfen oder Bolzen ausgestattet, über die die zur Bearbeitung erforderlichen Drehbewegungen des Kombiaggregats von dem Bearbeitungszentrum auf das Aggregat übertragen werden. Üblicherweise sind Bearbeitungszentren zur Verwendung von Kombiaggregaten mit einer CNC-Steuerung ausgestattet, die auch die Drehung des Aggregats zwischen den Bearbeitungsschritten Fräsen und Abziehen steuern kann.

Nach einer weiteren bevorzugten Ausführungsform der vorliegenden Erfindung umfaßt das Fräserwerkzeug des Bündigfräs- und Ziehklingenaggregats zumindest einen oberen und einen unteren Fräskopf. Die Verwendung mehrerer Fräsköpfe ermöglicht die Bearbeitung mehrerer Werkstückflächen bzw. - kanten in einem einzigen Arbeitsgang. Beispielsweise werden häufig die obere und die untere Kante einer Plattenstirnfläche simultan in einem Arbeitsgang mit einer Fase oder einer anderen Kontur versehen. Es ist dabei nicht erforderlich, daß die an der oberen Kante gefräste Kontur der an der unteren Kante des Werkstückes gefrästen Kontur gleicht, das Werkstück kann also variabel gestaltet werden.

Entsprechend ist in einer weiteren Ausführungsform vorgesehen, daß das erfindungsgemäße Ziehklingenwerkzeug zumindest eine obere und eine untere Ziehklinge umfaßt, so daß damit gleichzeitig eine obere und eine untere Kante der Werkstückstirnfläche bearbeitet werden kann. Auch hier wirkt sich die simultane Bearbeitung von zwei Werkstückkanten günstig auf die Bearbeitungszeit aus.

Vorzugsweise werden die Fräsköpfe des Fräswerkzeugs getastet gelagert. Eine horizontal und vertikal getastete Lagerung ermöglicht ein genaues Positionieren des Fräswerkzeugs bezüglich des Werkstückes. Gerade bei dem Einsatz von CNC gesteuerten Aggregaten ist es wichtig, daß die Werkzeugsteuerung Daten über die Position der Werkzeuge in Bezug zu der zu bearbeitenden Fläche erhält. Speziell können die Fräsköpfe auch federnd gelagert sein, wodurch eine genaue Positionierung der Werkzeuge zu dem Werkstück möglich ist.

In einer weiteren Ausführungsform sind auch die Ziehklingen des Kombiaggregats getastet gelagert. Für die Ziehklingen ist hauptsächlich eine vertikal getastete Lagerung sinnvoll, aber auch eine vertikal und horizontal getastete Lagerung der Ziehklingen ist möglich. Auch hier wird durch die getastete Lagerung erreicht, daß Werkzeug und Werkstück in dem gewünschten Abstand zueinander gehalten werden, oder daß beispielsweise die CNC-Steuerung Daten über die Position von Werkzeug und Werkstück erhält.

Um die Verlagerung der Drehachse des Fräswerkzeugs aus der Mitte des Aggregats zu erreichen, ist es notwendig ein Getriebe einzusetzen, das das Drehmoment von der Antriebsspindel des Bearbeitungszentrums an den Bündigfräser weiterleitet. Vorzugsweise wird hierfür ein Riementrieb eingesetzt. Der Riementrieb ist dabei vor allem auch unter dem Gesichtspunkt der Verringerung der bewegten Massen sowie aufgrund seiner geringen Wartungs- und Reparaturkosten für den Einsatz in dem Bündigfräs- und Ziehklingenaggregat geeignet.

### Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben und erläutert. Es zeigt:
- Fig. 1: eine schematische Darstellung eines Ausführungsbeispiels eines erfindungsgemäßen Kombi-Bündigfräs-Ziehklingenaggregats,
- Fig. 2: eine schematische Darstellung einer Radius-Ziehklinge,
- Fig. 3: eine schematische Darstellung einer Ziehklinge beim Abziehen,
- Fig. 4: eine schematische Darstellung eines Fräskopfes,
- Fig. 5: einen Schnitt durch ein Kombi-Bündigfräs-Ziehklingenaggregat gemäß einem Ansführungsbeispiel und
- Fig. 6: eine schematische Ansicht eines Riementriebs in einem Kombi-Bündigfräs-Ziehklingenaggregat.

### Beschreibung von Ausführungsbeispielen der Erfindung

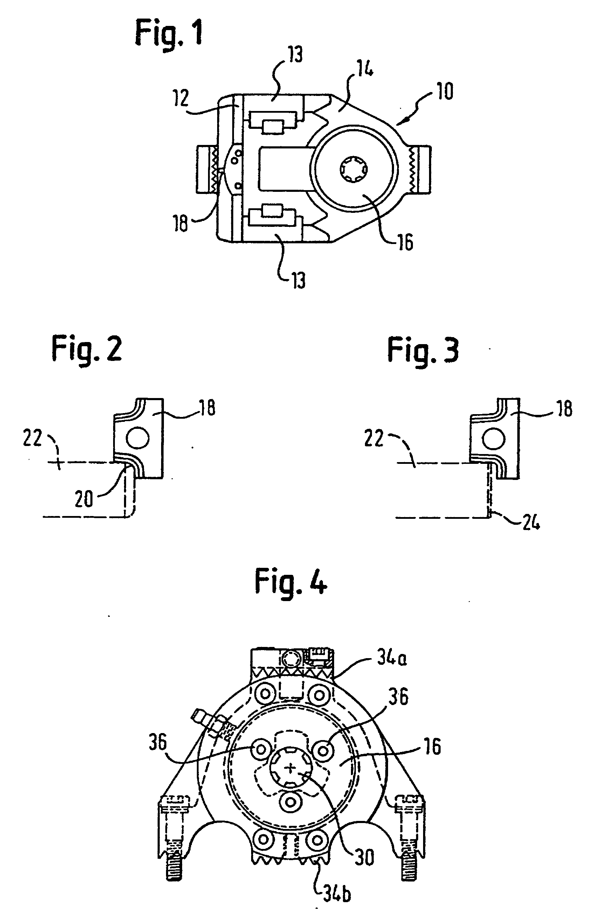

In Fig. 1 ist ein erfindungsgemäßes Bündigfräs- und Ziehklingenaggregat 10 schematisch dargestellt. Dieses Aggregat 10 umfaßt dabei ein einwechselbares Fräswerkzeug 16 sowie ein einwechselbares Ziehklingenwerkzeug 18. Erfindungsgemäß sind die jeweiligen Aufnahmeeinrichtungen 12, 14 als Schnellwechseleinrichtungen ausgebildet. Eine in Fig. 1 dargestellte Schnellwechseleinrichtung besteht aus den Aufnahmeeinrichtungen 12 und 14 und dem Grundträgerelement 13. Wenn die Klemmung des Grundträgerelements 13 in gelöstem Zustand ist, kann das Fräswerkzeug 16 mit der Aufnahmeeinrichtung 14 eingebracht werden. Desgleichen kann die Ziehklinge mit der Aufnahmeeinrichtung 12 eingebracht werden. Die Ziehklinge kann auch direkt in der eingebrachten Aufnahmeeinrichtung ausgewechselt werden.

In Fig. 4 ist eine Aufnahmeeinrichtung für einen Fräser zum Bündigfräsen abgebildet. Der Fräser ist auf der Aufnahmeeinrichtung mittels drei Schrauben und einer Zentrierbohrung befestigt. Die Verzahnung 34a dient zur Befestigung des vertikalen Tastschuhs. Die Verzahnung 34b dient zur Aufnahme der Aufnahmeeinrichtung auf dem Grundträgerelement.

In den Figuren 2 und 3 sind Ziehklingenwerkzeuge 18 schematisch dargestellt. Fig. 2 zeigt dabei die Bearbeitung von einem Radius 20 eines gestrichelt dargestellten Werkstückes 22 mit einer Radius-Ziehklinge 18. Wie in Fig. 2 ersichtlich, wird beim Abziehen eines Radius von dem meist plattenförmigen Werkstück nahezu die gesamte Arbeitskante der Ziehklinge eingesetzt. Im Gegensatz dazu zeigt Fig. 3 das Abfasen einer Leimfuge 24 eines gestrichelt dargestellten Werkstückes 22. Die Arbeitskante der Ziehklinge 18 greift hier nur zu einem geringen Teil in das Werkstück ein.

Fig. 4 zeigt einen Fräskopf. Zur Befestigung des Fräsers auf der Aufnahmeeinrichtung sind eine Zentrierung und drei Zylinderschrauben vorgesehen. Um eine schnelle und gleichzeitig torsionsfeste und schwingungsarme Verbindung des Fräskopfes 16 mit der Antriebswelle 30 sicherzustellen, ist die Antriebswelle als Vielkeilwelle 30 ausgebildet. Der Fräskopf kann so einfach und schnell auf die Welle aufgesteckt werden. Die komplette Aufnahmeeinrichtung wird mittels der Verzahnung 34b und Schraubverbindung am Grundträger befestigt.

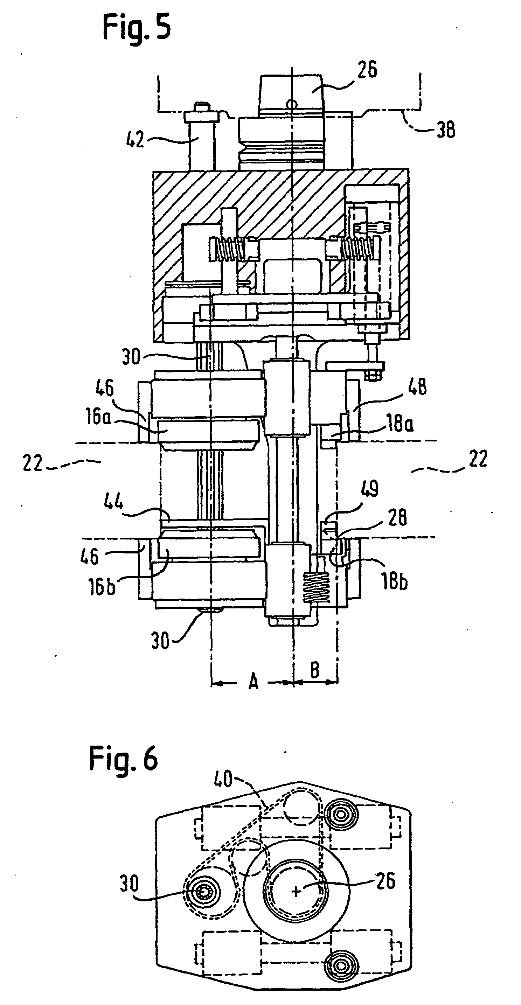

Fig. 5 ist ein Schnitt durch eine schematische Darstellung eines erf indungsgemäßen Bündigfräs- und Ziehklingenaggregats. Dabei sind zur Verdeutlichung der Arbeitsweise der Werkzeuge zwei Werkstücke 22 gestrichelt dargestellt. Dies entspricht nicht der üblichen Arbeitsweise des Kombiaggregats, da vorzugsweise immer nur ein Werkstück entweder von dem Fräswerkzeug oder von dem Ziehklingenwerkzeug zur gleichen Zeit bearbeitet werden kann.

Über eine Aggregatschnittstelle 38 kann das Bündigfräs- und Ziehklingenaggregat 10 in ein nicht dargestelltes Bearbeitungszentrum eingewechselt werden. Über Zapfen 42 ist das Aggregat zur nicht dargestellten C-Achse verdrehgesichert. Über einen Konus (HSK F63) läßt sich das Aggregat schnell und sicher in dem Bearbeitungszentrum befestigen.

Wie in Fig. 5 verdeutlicht, ist der Abstand A von der Drehachse 30 des Fräswerkzeugs 16 zu der Drehachse 26 der Aggregatschnittstelle erfindungsgemäß größer oder gleich dem Abstand B von der Drehachse 26 der Aggregatschnittstelle zu dem Werkzeugbezugspunkt 28 der Arbeitskante des Ziehklingenwerkzeugs 18. Der Abstand B muß dabei wie in Fig. 5 gezeigt nicht exakt Null sein. Durch die erfindungsgemäße Beziehung der Abstände A und B zueinander ist es zwingend erforderlich, daß das Fräswerkzeug 16 exzentrisch zu der Drehachse 26 der Aggregatschnittstelle angeordnet wird. Der Abstand A sollte vorteilhafterweise mindestens den halben Fräserdurchmesser betragen, damit die Ziehklinge möglichst nahe an das Zentrum kommt.

Auf der Drehachse 30 des Fräswerkzeugs können auch mehrere Fräsköpfe 16a und 16b gleichzeitig angebracht sein. Dies ist vor allem sinnvoll, um beispielsweise die obere und die untere Kante der Stirnfläche eines gestrichelt dargestellten plattenförmigen Werkstückes simultan zu bearbeiten. Auch das Ziehklingenwerkzeug kann beispielsweise eine obere 18a und eine untere Ziehklinge 18b umfassen, so daß gleichzeitig die obere und die untere Kante eines Werkstückes abgezogen werden kann. Es besteht auch die Möglichkeit, oben und unten unterschiedliche Profile zu bearbeiten.

Zur Steuerung des Kombiaggregats bzw. zur exakten Bestimmung der Position der Werkzeuge bezüglich der Werkstückoberfläche werden Fräser- oder Ziehklingenwerkzeuge oft getastet gelagert. In Fig. 5 sind entsprechende Taster 46 für eine vertikal getastete Lagerung des Bündigfräsers bzw. ein Taster 44 für die horizontal getastete Lagerung des Bündigfräsers dargestellt. Eine vertikal getastete Lagerung der Ziehklingen ist über die Taster 48 und eine horizontal getastete Lagerung über den Taster 49 möglich.

Durch die Anordnung des Ziehklingenwerkzeugs 18 nach Fig. 5 wird erreicht, daß die Geschwindigkeit des Ziehklingenwerkzeugs 18 beim Abziehen des Werkstückes 22 weitgehend konstant bleibt. Auf diese Weise werden Marken oder Weißbruch auch bei dem Einsatz von Radiusziehklingen vermieden.

In Fig. 6 ist eine schematische Ansicht der Anordnung der Drehachsen eines erfindungsgemäßen Kombiaggregats 10 dargestellt. Über die mit der nicht dargestellten Spindel des Bearbeitungszentrums verbundene Drehachse 26 der Aggregatschnittstelle 38 kann ein Drehmoment in das Kombiaggregat eingeleitet werden. Da die Drehachse des Fräswerkzeugs 30 erfindungsgemäß exzentrisch zu der Drehachse 26 angeordnet ist, ist es erforderlich das Drehmoment über einen gestrichelt dargestellten Riementrieb 40 zu dem Fräswerkzeug 16 zu übertragen. Auch die Verwendung anderer bekannter Getriebearten ist hierfür möglich.

## Patentansprüche

1. Bündigfräs- und Ziehklingenaggregat, das in eine Spindeleinheit eines zur Bearbeitung von meist plattenförmigen Werkstücken dienenden Bearbeitungszentrums einwechselbar ist, mit
- einer Aggregatschnittstelle (38) zum Ankoppeln des Aggregats (10) an die Spindeleinheit des Bearbeitungszentrums,
- einer Aufnahmeeinrichtung (14) für ein einwechselbares Fräswerkzeug (16), die zur Übertragung eines Drehmomentes von der Spindeleinheit des Bearbeitungszentrums zu dem Fräswerkzeug (16) mit der Aggregatschnittstelle (38) gekoppelt ist und
- einer weiteren Aufnahmeeinrichtung (12) für ein einwechselbares Ziehklingenwerkzeug (18) mit einer Arbeitskante (20),
**dadurch gekennzeichnet, daß**
der Abstand (A) zwischen der Drehachse (26) der Aggregatschnittstelle (38) und der Drehachse (30) der Fräswerkzeug-Aufnahmeeinrichtung (14) größer ist als der Abstand (B) zwischen der Drehachse (26) der Aggregatschnittstelle (38) und dem zur CNC-Programmierung dienenden Werkzeugbezugspunkt (28) des einwechselbaren Ziehklingenwerkzeugs (18).

2. Bündigfräs- und Ziehklingenaggregat nach Anspruch 1, **dadurch gekennzeichnet, daß** die Drehachse (30) des Fräswerkzeugs (16) von der Drehachse (26) der Aggregatschnittstelle (38) derart beabstandet ist, daß die Ziehklingenwerkzeug-Aufnahmeeinrichtung (12) und der CNC-Bezugspunkt (28) des hierin einwechselbaren Ziehklingenwerkzeugs (18) im wesentlichen konzentrisch zu der Drehachse (26) der Aggregatschnittstelle (38) angeordnet ist.

3. Bündigfräs- und Ziehklingenaggregat nach Anspruch 1 oder 2, **dadurch gekennzeichnet, daß** die Fräswerkzeug-Aufnahmeeinrichtung (14) und/oder die Ziehklingenwerkzeug-Aufnahmeeinrichtung (12) als Schnellwechseleinrichtung ausgebildet sind.

4. Bündigfräs- und Ziehklingenaggregat nach Anspruch 1, **dadurch gekennzeichnet, daß** die Ziehklingen-Aufnahmeeinrichtung (12) zur Aufnahme sowohl von Flächenziehklingen wie auch von Radiusziehklingen oder Wendeplattenziehklingen ausgebildet ist.

5. Bündigfräs- und Ziehklingenaggregat nach Anspruch 1, **dadurch gekennzeichnet, daß** die Aggregatschnittstelle (38) so ausgebildet ist, daß das Aggregat (10) um die Drehachse (26) der Aggregatschnittstelle drehbar ist.

6. Bündigfräs- und Ziehklingenaggregat nach Anspruch 5, **dadurch gekennzeichnet, daß** das Aggregat CNC-gesteuert um die Drehachse (26) der Aggregatschnittstelle (38) drehbar ist.

7. Bündigfräs- und Ziehklingenaggregat nach Anspruch 1, **dadurch gekennzeichnet, daß** der zur CNC-Programmierung dienende Werkzeugbezugspunkt (28) des Ziehklingenwerkzeugs (18) auf der Drehachse (26) der Aggregatschnittstelle liegt, jedoch in nicht größerem Abstand als der minimale Werkstückinnen- oder -außendurchmesser.

8. Bündigfräs- und Ziehklingenaggregat nach Anspruch 1, **dadurch gekennzeichnet, daß** das Fräswerkzeug (16) zumindest einen oberen (16a) und einen unteren Fräskopf (16b) umfaßt.

9. Bündigfräs- und Ziehklingenaggregat nach Anspruch 8, **dadurch gekennzeichnet, daß** der obere (16a) und der untere Fräskopf (16b) des Fräswerkzeugs (16) vertikal und/oder horizontal getastet gelagert ist.

10. Bündigfräs- und Ziehklingenaggregat nach Anspruch 8 oder 9, **dadurch gekennzeichnet, daß** der obere (16a) und der untere Fräskopf (16b) des Fräswerkzeugs (16) federnd gelagert ist.

11. Bündigfräs- und Ziehklingenaggregat nach Anspruch 1, **dadurch gekennzeichnet, daß** das Ziehklingenwerkzeug (18) eine obere (18a) und eine untere Ziehklinge (18b) umfaßt.

12. Bündigfräs- und Ziehklingenaggregat nach Anspruch 11, **dadurch gekennzeichnet, daß** die obere (18a) und die untere Ziehklinge (18b) vertikal und/oder horizontal getastet gelagert ist.

13. Bündigfräs- und Ziehklingenaggregat nach Anspruch 1, **dadurch gekennzeichnet, daß** die Drehachse (30) des Fräswerkzeugs (16) mittels eines Getriebes (40) über die Drehachse (26) der Aggregatschnittstelle (38) angetrieben wird.

14. Bündigfräs- und Ziehklingenaggregat nach Anspruch 13, **dadurch gekennzeichnet, daß** das Getriebe ein Riementrieb ist.

## Claims

1. Flush cutting and scraping aggregate which is changeable into a spindle unit of a machining centre serving to machine mostly plate-shaped workpieces, with
- an aggregate intersection (38) for coupling the aggregate (10) to the spindle unit of the machining centre,
- a receiving device (14) for a changeable cutting tool (16) which is coupled to the aggregate intersection (38) to transmit a torque from the spindle unit of the machining centre to the cutting tool (16) and
- a further receiving device (12) for a changeable scraping tool (18) with an operating edge (20),
**characterised in that** the distance (A) between the hinge pin (26) of the aggregate intersection (38) and the hinge pin (30) of the cutting tool receiving device (14) is greater that the distance (B) between the hinge pin (26) of the aggregate intersection (38) and the tool point of reference (28) of the changeable scraping tool (18) serving for CNC programming.

2. Flush cutting and scraping aggregate according to claim 1, **characterised in that** the hinge pin (30) of the cutting tool (16) is distanced from the hinge pin (26) of the aggregate intersection (38) in such a way that the scraping tool receiving device (12) and the CNC point of reference (28) of the herein changeable scraping tool (18) is arranged substantially concentric to the hinge pin (26) of the aggregate intersection (38).

3. Flush cutting and scraping aggregate according to claim 1 or 2, **characterised in that** the cutting tool receiving device (14) and/or the scraping tool receiving device (12) are constructed as quick-changing devices.

4. Flush cutting and scraping aggregate according to claim 1, **characterised in that** the scraper receiving device (12) is constructed for receiving both planar scrapers and radius scrapers or turning plate scrapers.

5. Flush cutting and scraping aggregate according to claim 1, **characterised in that** the aggregate intersection (38) is constructed in such a way that the aggregate (10) is rotatable about the hinge pin (26) of the aggregate intersection.

6. Flush cutting and scraping aggregate according to claim 5, **characterised in that** the aggregate is rotatable by CNC control about the hinge pin (26) of the aggregate intersection (38).

7. Flush cutting and scraping aggregate according to claim 1, **characterised in that** the tool reference point (28) of the scraping tool (18) serving for CNC programming is located on the hinge pin (26) of the aggregate intersection, but at a distance not less than the minimum inner or outer diameter of the workpiece.

8. Flush cutting and scraping aggregate according to claim 1, **characterised in that** the cutting tool (16) comprises at least one upper (16a) and one lower cutting head (16b).

9. Flush cutting and scraping aggregate according to claim 8, **characterised in that** the upper (16a) and the lower cutting head (16b) of the cutting tool (16) are held as vertically and/or horizontally scanned.

10. Flush cutting and scraping aggregate according to claim 8 or 9, **characterised in that** the upper (16a) and the lower cutting head (16b) of the cutting tool (16) are held as resilient.

11. Flush cutting and scraping aggregate according to claim 1, **characterised in that** the scraping tool (18) comprises an upper (18a) and a lower scraper (18b).

12. Flush cutting and scraping aggregate according to claim 11, **characterised in that** the upper (18a) and the lower scraper (18b) are held as vertically and/or horizontally scanned.

13. Flush cutting and scraping aggregate according to claim 1, **characterised in that** the hinge pin (30) of the cutting tool (16) is driven via the hinge pin (26) of the aggregate intersection (38) by means of gearing (40).

14. Flush cutting and scraping aggregate according to claim 13, **characterised in that** the gearing is a belt drive.

## Revendications

1. Appareil de fraisage affleurant et de raclage interchangeable dans un mandrin d'un centre d'usinage servant à usiner des pièces généralement en forme de plaques, comprenant
- une interface d'appareil (38) pour coupler l'appareil (10) au mandrin du centre d'usinage,
- un logement (14) pour un outil de fraisage interchangeable (16) qui est couplé à l'interface d'appareil (38) pour transmettre un couple de rotation depuis le mandrin du centre d'usinage jusqu'à l'outil de fraisage (16) et un autre logement (12) destiné à un outil de raclage interchangeable (18) comportant une arête de travail (20),
**caractérisé en ce que**
la distance (A) entre l'axe de rotation (26) de l'interface d'appareil (38) et l'axe de rotation du logement (14) de l'outil de fraisage est plus grande que la distance (B) entre l'axe de rotation (26) de l'interface d'appareil (38) et le point de référence (28) de l'outil de raclage (18) interchangeable servant à la programmation CNC.

2. Appareil de fraisage affleurant et de raclage selon la revendication 1, **caractérisé en ce que** l'axe de rotation (30) de l'outil de fraisage (16) est à une distance telle de l'axe de rotation (26) de l'interface d'appareil (38) que le logement de l'outil de raclage (12) et le point de référence CNC (28) de l'outils de raclage (18) interchangeable dans celui-ci est disposé essentiellement de façon concentrique par rapport à l'axe de rotation (26) de l'interface d'appareil (38).

3. Appareil de fraisage affleurant et de raclage selon la revendication 1 ou la revendication 2, **caractérisé en ce que** le logement (14) de l'outil de fraisage et/ou le logement (12) de l'outil de raclage sont configurés en tant que dispositif de changement rapide.

4. Appareil de fraisage affleurant et de raclage selon la revendication 1, **caractérisé en ce que** logement (12) de l'outil de raclage est agencé pour recevoir aussi bien des racloirs à facettes que des racloirs à rayon ou des racloirs à plaquettes amovibles.

5. Appareil de fraisage affleurant et de raclage selon la revendication 1, **caractérisé en ce que** l'interface d'appareil (38) est configurée de telle façon que l'appareil (10) puisse tourner autour de l'axe de rotation (26) de l'interface d'appareil.

6. Appareil de fraisage affleurant et de raclage selon la revendication 5, **caractérisé en ce que** l'appareil peut tourner autour de l'axe de rotation (26) de l'interface d'appareil (38) grâce à une commande CNC.

7. Appareil de fraisage affleurant et de raclage selon la revendication 1, **caractérisé en ce que** le point de référence servant à la programmation CNC de l'outil de raclage (18) se trouve sur l'axe de rotation (26) de l'interface d'appareil, mais pas à une plus grande distance que le diamètre minimum intérieur ou extérieur de la pièce à usiner.

8. Appareil de fraisage affleurant et de raclage selon la revendication 1, **caractérisé en ce que** l'outil de fraisage (16) comporte au moins une tête de fraisage supérieure (16a) et inférieure (16b).

9. Appareil de fraisage affleurant et de raclage selon la revendication 8, **caractérisé en ce que** la tête de fraisage supérieure (16a) et inférieure (16b) de l'outil de fraisage (16) est montée avec capacité de déplacement vertical et/ou horizontal.

10. Appareil de fraisage affleurant et de raclage selon la revendication 8 ou la revendication 9, **caractérisé en ce que** la tête de fraisage supérieure (16a) et inférieure (16b) de l'outil de fraisage est montée élastiquement.

11. Appareil de fraisage affleurant et de raclage selon la revendication 1, **caractérisé en ce que** l'outil de raclage (18) comporte un racloir supérieur (18a) et un racloir inférieur (18b).

12. Appareil de fraisage affleurant et de raclage selon la revendication 11, **caractérisé en ce que** le racloir supérieur (18a) et le racloir inférieur (18b) est monté avec capacité de déplacement vertical et/ou horizontal.

13. Appareil de fraisage affleurant et de raclage selon la revendication 1, **caractérisé en ce que** l'axe de rotation (30) de l'outil de fraisage (16) est entraîné au moyen d'un mécanisme d'entraînement (40) par l'intermédiaire de l'axe de rotation (26) de l'interface d'appareil (38).

14. Appareil de fraisage affleurant et de raclage selon revendication 13, **caractérisé en ce que** le mécanisme d'entraînement est un entraînement à courroie.
